# EUROPEAN PATENT APPLICATION

(11) **EP 4 177 297 A1**
(43) Date of publication of application: **10.05.2023**
(21) Application number: 21206290.5
(22) Date of filing: 03.11.2021
(51) Int. Cl.: C08J 3/20, C08J 5/04, C08K 7/02, C08J 3/18, C08L 67/02, C08L 67/04, B29C 64/118, B33Y 70/10, B33Y 80/00

(54) **AN ECOLOGICAL BIODEGRADABLE PACKAGING MATERIAL FROM ALOE VERA REINFORCED BIO-PLASTICS AND METHODS OF USING THE SAME**

(71) Applicant: Sali-Matuszok, Sevda, 91341 Röttenbach (DE); Stumpf, André, 97072 Würzburg (DE); Romani, Amira, 97072 Würzburg (DE); Missango, Gustave, 91058 Erlangen (DE); Wielipolski, Mateusz, 95448 Bayreuth (DE)
(72) Inventor: Sali-Matuszok, Sevda, 91341 Röttenbach (DE); Stumpf, André, 97072 Würzburg (DE); Romani, Amira, 97072 Würzburg (DE); Missango, Gustave, 91058 Erlangen (DE); Wielipolski, Mateusz, 95448 Bayreuth (DE)
(74) Representative: Knoke, Isabel Yvonne

(57) **Abstract**

The invention relates to a Method for producing an aloe vera reinforced bio-composite material, comprising:
a) Plasticizing a binder in a first extruder, wherein the binder comprises a polymer;
b) Providing a mixture of fibrous filler material made from aloe vera, in particular from aloe vera leaves, and a hydrophobic agent dissolved and/or dispersed in a liquid carrier;
c) Mechanically shearing and drying the mixture in a second extruder whereby liquid is at least partly or completely extracted from the mixture; and .
d) Blending the dried mixture with the plasticized binder.

The invention further relates to an aloe vera reinforced bio-composite material and a container made thereof.

## Description

### Field of Invention:

The invention relates to composite materials. More specifically to bio-plastic composite materials in which biological material is integrated with biodegradable plastic material. The invention also relates to bio-plastic composites with antiseptic properties and UV-light absorbing properties as well as manufacturing of bio-plastic composite pellets, granules or a filament for additive manufacturing. Further, the invention relates to biodegradable materials made of biological components and also to a method of producing molded or 3d-printed parts out of it, which can be used, for example, as packaging for cosmetic and household goods or other small-scale products.

### Background:

In light of sustainability issues connected to the utilization of fossil-based polymer materials, especially for packaging, sustainable material solutions with clearly defined end-of-life- scenarios become more and more important. Thereby, biodegradable polymers as well as natural fiber reinforced (filled) polymers gain attention due to their clear ecological advantages. With respect to packaging, biodegradability of the material that the packaging is made allows the material to be discarded to industrial composting plants and therefore minimizing plastic waste.

Natural fiber fillers that can be incorporated into thermoplastic polymer matrices, on the other hand, reduce the amounts of virgin polymer materials and resources used for making the packaging. Regarding materials for 3d-printing, natural fiber fillers improve shrinkage behavior and thermal stability of the polymers. Hence, a combination of both properties, i.e. biodegradability and natural fiber reinforcement, provides a very eco-friendly and flexible to use material solution with a low impact on the environment. Such innovative approaches have already been realized and offer industrially viable raw material solutions for many fields of applications such as packaging, building materials, architecture, transportation and leisure.

Already commercialized examples for such biodegradable products are mulch foils, flower pots, coffee capsules, ums, disposable tableware, biowaste bags, rigid and flexible food packaging, or golf tees. Hydrolysis, either catalyzed by enzymes or at elevated temperatures, in industrial compost, in the presence of water disintegrates such called biodegradable polymers, while microorganisms (bacteria, fungi) incorporate these fragments for full conversion to harmless substances such as water, C0₂, biomass and minerals. Since the required properties of a product are largely dependent on the application, composites made out of different natural fiber sources in varying weight fractions are frequently seen as a convenient and low cost possibility to obtain materials with tailored properties. Very often plant-derived cellulosic materials are used to fill or reinforce plastics for the generation of partly or all-biobased (semi-finished or finished) products. In particular, focusing on the packaging sector, such cellulosic fiber filled composites made from thermoplastic are being used successfully over the entire sector as injection molded or blown containers and/or bags in all kind of shapes and dimensions. Similar advantages hold for applications in the field of additive manufacturing, where such materials can be used especially in fused layer modelling (FLM) technology.

The goal of this invention is to contribute to making the packaging and additive manufacturing sector more sustainable by offering a novel material solution made from a cellulosic fiber source that has never been used in this context before. By doing so, the invention results in materials with improved physical properties (i.e. mechanical strength, thermal resistance, etc.) but also in materials with new functional properties (antiseptic features, color integration, UV-light protection etc.). The invention also contributes to minimize the plastic waste problem as well as reduce the use of fossil- based resources for packaging, additive manufacturing and other applications. Furthermore, the invention allows to close material loops by using a waste material stream from the cosmetic and nutrition industry as a resource for producing the invention, therefore contributing to the establishment of circular economic material loops and product concepts driven by circular design.

Furthermore, one advantage of this invention is that the thermoplastic is replaced by an inexpensive, regenerative and CO₂ -binding natural filler material that is easy to process and constitutes a waste-byproduct from established industrial processes. Another advantage is that the invention allows to create lighter and more environmentally end-products that those currently available on the market.

### Prior Art:

- Natural fiber filled bio-plastic composites: US Pat. No. 7 387 756, US Pat. No. 6 284 838, US Pat. No. 2010/0029809 A1, US Pat. No. 2017/0121473 A1, AU 2013328401 B2, EP 3 656 524 B1
- Biodegradable plastics: US Pat. No. 10 179 856 B2, US Pat. No. 2009/01 10654 A1
- Products made from biodegradable plastics, e.g. packaging: WO 2009 / 079579, US Pat. No. 10 179 856 B2, CN 000109808236 A
- Biodegradable materials for packaging: Journal of Reinforced Plastics and Composites, 2016, Vol. 35(19) 1411-1423
- Additive manufacturing with natural fiber composites: JP2017222169A, Balla et al. 2019 "Additive manufacturing of natural fiber reinforced polymer composites: Processing and prospects", KR20170141237A, US20160208094A1

There are several disadvantages coming along with the materials, methods and applications disclosed above:
- Molded parts and components oftentimes reveal low mechanical stability
- Curing in the presence of protein and cellulose based glues is relatively slow
- Some of the materials cannot be bio-degraded and contribute to the plastic waste problem
- The natural fibers used for the production of natural fiber filled bio-plastic composites need to be compatibilized or pre-treated using additives (silane coupling agents) and other chemical processes (alkaline treatment)
- Apart from reducing the amount of plastic or enhancing impact toughness natural fibers used as fillers do not have any additional functions in the composite
- Most of the above-mentioned materials adopt a brownish or dark color, which needs additional colorants to be used for packaging of cosmetics
- A major challenge in the manufacturing of natural fiber filled composites on conventional extruders is related to the high moisture uptake of the natural fibers. Aloe vera fibers, on the other hand, come with an inherently low moisture uptake and therefore exhibit a significant advantage for processing in conventional extruders.
- Natural fiber filled biobased composite materials suitable for 3d-printing exhibit low thermal stability and relatively high shrinkage

### Summary of the Invention:

In countries like, for example, USA, Mexico, Spain, Portugal, etc. a significant amount of aloe vera plantations have been established to supply the cosmetic industry with the gel and oil components of the plant (inside the leaves). These gel and oily components of the aloe vera plant are used as ingredients, supplements or additives in many cosmetic, medical, pharmaceutical, nutritional and food or beverage products. In most cases, the leaves of the aloe vera plant, which constitute the outer layer that holds the gel- and oil-type components of the plant, are not used and therefore end up as waste by- products that need to be discarded. As presented in this disclosure, the leaves provide a suitable material source for the production of aloe vera fibers that can be used as a filler for thermoplastic composites. In addition, the fibers produced out of those leaves incorporate certain mechanical and biological functionalities into the composite material due to their inherent mechanical, physical properties such as UV-light absorption as well as antiseptic effectivity. After drying and chopping, the leaves can be incorporated into a large variety of thermoplastic matrices and equip products made from these types of composites with color, UV-light absorbing, antiseptic, mechanical and physical functionalities, which will be described below. Therefore, this invention relates to polymer-based materials that comprise a thermoplastic composite matrix and a type of aloe vera fiber fillers.

According to the invention a method for producing an aloe vera reinforced bio-composite material, comprising:
a) Plasticizing a binder in a first extruder, wherein the binder comprises a polymer;
b) Providing a mixture of fibrous filler material made from aloe vera, in particular from aloe vera leaves, and a hydrophobic agent dissolved and/or dispersed in a liquid carrier;
c) Mechanically shearing and drying the mixture in a second extruder whereby liquid is at least partly or completely extracted from the mixture; and .
d) Blending the dried mixture with the plasticized binder.

The method may comprise preparation of the natural fiber filler out of its raw material form, the raw material form comprising dried waste material from the production of aloe vera extracts, in particular the dried waste material corresponds to aloe vera leave residues with a length of 10 - 50 mm and a moisture content of 1 - 26 %.

Additionally the leaves may be chopped and/or shredded into a powder with a fiber length of·0.05 - 12 mm, washed with hot water and dried at temperatures between 60°C and 120°C for a time between 20 - 3600 minutes to remove any residues of dirt and parenchyma cells, wherein in particular aloe vera leaf particles have sizes in a range from 20 mesh (sieve pore width of 841 µm) to 200 mesh (sieve pore width of 74 µm).

In an embodiment, the binder and/or the polymer is a biodegradable bio-based and/or recycled polymer and/or recyclable polymer.
The polymer may be chosen from PLA, PLA, PCL, PBS, PHBH, PBAT, PBSA, PHB, PHBV, PBT, PET, PIT, PC, HDPE, PVC, LDPE, PP, PS, natural biopolyesters such as polymers from the group of Polyhydroxyalkanoates (PHA) such as PHB, PHBV, PHBH, as well as natural heteropolymers with repeating ester linkages on the backbone, such as Suberin (Sub), and Cutin (Cut), and/or combinations thereof. Preferably, the binder may comprise Polylactic acid (PLA), Polybutylene succinate (PBS), Poly(butylene succinate-co-adipate) (PBSA), Polyhydroxybutyrate (PHB), Poly(3-hydroxybutyrate-co-3 - hydroxyvalerate) (PHBV), Poly(3-hydroxybutyrate-co-3- hydroxyhexanoate) (PHBH), Polycaprolactone (PCL), Polybutylene adipate terephthalate (PBAT).
The binder may preferably comprise a combination chosen from PLA/PBS, PLA/PBSA, PBAT/PHBH, and/or PLA/PCL. Preferably the combination is used with a weight ratio (w/w) of 80/20, 50/50, 20/80.

In an embodiment the method comprises
- drying of the aloe vera fibers as well as the mixture of the fibers with an optional hydrophobic agent dissolved and/or dispersed in a liquid carrier, preferably performed in a deliquification extruder and optionally comprising heating the mixture. Additionally or alternatively
- the hydrophobic agent may comprise one of PE-PU, BTAK, LA, OA, CLW, CBW, RW, LO, SO, WO and/or combinations thereof, wherein preferably, a mass ratio of hydrophobic agent to aloe vera fibrous material is at least 1:200, preferably at least 1:100, more preferably at least 1:50, even more preferably at least 1:20, most preferably at least 1:15, wherein preferably, the mass ratio of hydrophobic agent to aloe vera fibrous material is at most 2:1, preferably at most 1:1, more preferably at most 1:2, most preferably at most 1:5.

Additionally or alternatively the hydrophobic agent is preferentially a substance from the group of polyester-polyurethane elastomer (PEPU), which may be dispersed or dissolved in a liquid, in particular water.

According to an aspect of the invention a Aloe vera reinforced bio-composite material comprising a plasticized binder and a mixture of fibrous filler material made from aloe vera and in particular a hydrophobic agent, may be made by the method as disclosed above and/or may be provided as a granulate or a powder.

According to an aspect of the invention a container for packaging of dry and/or moist substances is provided, the container being made from a bio-composite material, in particular made by the method according as disclosed above. The container may be made from a granulate or powder of Aloe vera reinforced bio-composite material. The container may be rigid or flexible.

In an embodiment the container is produced by extrusion, injection molding, injection blow molding, compression molding, coextrusion, thermoforming and/or extrusion-based additive manufacturing technologies, e.g. FLM, and/or 3D-printing.

In an embodiment the container may have a slightly to intensely green color, which color depending on the fiber-filler ratio.

In an embodiment, the container may have antiseptic properties, and/or UV-absorbing properties, and/or UV-light sensitivity to determine exposure levels to sunlight.

In an embodiment, the aloe vera reinforced bio-composite material of aloe vera fiber composites comprises a fiber-matrix interface comprising PLA and recycled high density polyethylene matrix in compositions ranging from 5 to 40% of fiber volume fraction. In particular the fiber-matrix interface may comprise the aloe vera fiber treated with NaOH prior to producing the composite.

In an embodiment, the composites comprising a fiber volume fraction of 1 - 30 %, The container may be made by 3-D-printing.

In an embodiment, the bio-composite material may have a tensile strengths in the order of 60 - 90 MPa, a maximum bending strength on the order of 80 - 120 MPa and a maximum impact resistance of 40 - 60 J/m.

In an embodiment, the container may be a container for food and/or drinks and/or medicine and/or portable electronic devices. In particular the container may be a sleave for a tablet or mobile phone.

In an embodiment, the container may be a bottle or screw-cap container.

The purpose of this invention is to provide a biodegradable composite material composed of a natural vegetable fiber extracted from aloe vera dried leaves and a biodegradable and bio-based polymer, which has a low-environmental impact due to a circular material design, is lightweight, mechanically strong, has excellent formability and water resistance, involves antiseptic properties, absorbs UV-light and can be used without further coloring as packaging containers for cosmetics, dietary supplements and dry medication. The present invention also provides a production method of the composite material as well as the production of molded parts out of it. Particularly, the invention relates to a method for manufacturing an aloe vera reinforced bio-composite material, comprising:
a) Plasticizing a binder in a first extruder, wherein the binder comprises a polymer;
b) Providing a mixture of fibrous filler material made from aloe vera and a hydrophobic agent dissolved and/or dispersed in a liquid carrier;
c) Mechanically shearing and drying the mixture in a second extruder whereby liquid is at least partly extracted from the mixture or is not present in liquid form anymore; and .
d) Blending the dried mixture with the plasticized binder.

The advantage of this method is to provide hydrophobic natural fiber filled bio-composites from fibrous materials sourced from aloe vera production residues, with resulting superior product qualities due to a reduction of water uptake.

A natural fiber filled bio-plastic composite comprising steps of processing a biological material; classifying the biological material to separate a fiber material from a non-fiber material; selecting the classified fiber material according to a desired composite property; and forming a bio-plastic composite by integrating the selected fiber material with a plastic material.

A third aspect of this invention provides a production method of a composite material composed of a natural vegetable fiber and a bio-polymer. The production method includes the preparation of the natural fiber filler out of its raw material form, which comprises dried waste material from the production of aloe vera extracts. The dried waste material corresponds to aloe vera leave residues with a length of 10 - 50 mm and a moisture content of 1 - 26 %. Those leaves are chopped and/or shredded into a powder with a fiber length of·0.05 - 12 mm, washed with hot water and dried at temperatures between 60°C and 120°C for a time between 20 - 3600 minutes to remove any residues of dirt and parenchyma cells. The geometries may be differentiated into fibers (1/d > 10) and particles (1/d < 10). For example. The aloe vera leaf particles may show sizes in a range from 20 mesh corresponding to a sieve pore width of 0.841 mm (also classified as coarse) to 200 mesh corresponding to a sieve pore width of 0.074 mm (also classified as extra fine). The aspect ratio of wood particles may be between 1.1 and 5, whereas wood fibers may have higher ratios from 10 and up to >>100.

A fourth aspect of this invention provides a production method of a composite material composed of an aloe vera vegetable fiber and a biodegradable bio-based and/or recycled and/or recyclable polymer such as PLA, PLA, PCL, PBS, PHBH, PBAT, PBSA, PHB, PHBV, PBT, PET, PIT, PC, HDPE, PVC, LDPE, PP, PS, natural biopolyesters such as polymers from the group of Polyhydroxyalkanoates (PHA) such as PHB, PHBV, PHBH, as well as natural heteropolymers with repeating ester linkages on the backbone, such as Suberin (Sub), and Cutin (Cut), and/or combinations thereof. The abbreviations above and throughout the description are explained in the list of abbreviations at the end of the description. Preferably, the binder may comprise Polylactic acid (PLA), Polybutylene succinate (PBS), Poly(butylene succinate-co-adipate) (PBSA), Polyhydroxybutyrate (PHB), Poly(3-hydroxybutyrate-co-3 - hydroxyvalerate) (PHBV), Poly(3-hydroxybutyrate-co-3-hydroxyhexanoate) (PHBH), Polycaprolactone (PCL),

Polybutylene adipate terephthalate (PBAT). Preferable combinations are PLA/PBS, PLA/PBSA, PBAT/PHBH, and PLA/PCL. Each of these combinations, as well as other combinations, may be used with a weight ratio (w/w) of 80/20, 50/50, 20/80. The polymer is a thermoplastic matrix that exhibits sufficient bonding to the fibers to ensure water repellent and mechanical properties required for applications in packaging. Additionally or alternatively, the polymer may be a polyester, preferably one of the above mentioned polyesters, with a mass average molecular weight M_{W}. of 80,000 to 1,000,000 g/mol.

A fifth aspect of this invention is the production of granules out of the composite that can be used for molding of embodiments and containers for packaging of dry and moist substances. Further, the present invention provides for various manufacturing processes of making bio-plastic composites.
These manufacturing processes may involve extrusion, injection molding, injection blow molding, compression molding, coextrusion, thermoforming and/or extrusion-based additive manufacturing technologies, e.g. FLM.

A sixth aspect of this invention comprises embodiments, containers and 3d-printed structures out of the composite material that have a slightly to intensely green color, which tone depends on the fiber-filler ratio and added colorants.

A seventh aspect of this invention relates to the antiseptic properties induced by the utilization of the aloe vera fibers as raw material. Aloe vera contains 6 antiseptic agents: Lupeol, salicylic acid, urea nitrogen, cinnamonic acid, phenols and sulfur. They all have inhibitory action on fungi, bacteria and viruses. These functions remain active to a certain extent also in the composite material. This leads to inherent antiseptic properties of the corresponding polymer products and, for example, results in a prolonged storage capacity for the contents of the containers.

An eighth aspect of the invention relates to the UV-absorbing properties of the natural fiber filler, which can be used to induce various functions into the polymer such as UV-light protection, UV-light sensitivity for sensor applications, UV- light protection for photo-sensitive ingredients or UV-light sensitivity to determine exposure levels to sunlight. These properties stem from the fact that the aloe vera leaves contain flavones and flavonols, which act as protection against UV radiation and short-wave light. They are deposited in the free form in aloe to prevent the photo-oxidative destruction of membranes and photosynthetic pigments.

A ninth aspect of the invention relates to the significant improvements of mechanical properties (tensile, impact and bending strength) of the neat polymer upon introducing aloe vera fiber reinforcements into the polymer matrix at fiber- matrix ratios ranging from 5 to 40%. The composites achieved maximum tensile strengths on the order of 60 - 90 MPa, a maximum bending strength on the order of 80 - 120 MPa and a maximum impact resistance of 40 - 60 J/m. Among the tested samples, the composites with 1 - 30 % of fiber volume fraction demonstrated the best mechanical properties with regard to tensile strength and modulus, flexural strength and modulus as well as impact resistance.

A tenth aspect of the invention relates to embodiments of aloe vera fiber composites with PLA and recycled high density polyethylene matrix in various compositions ranging from 5 to 40% of fiber volume fraction. The fiber-matrix interface can be improved by treating the aloe vera fiber with NaOH prior to producing the composite. The composites achieved maximum tensile strengths on the order of 60 - 100 MPa. Among the tested samples, the composites with 1 - 30 % of fiber volume fraction demonstrated the best mechanical properties with regard to tensile strength and modulus, flexural strength and modulus as well as impact resistance.

An eleventh aspect of the invention relates to the significant improvements of thermal resistance and shrinkage properties of the neat polymer upon introducing aloe vera fiber reinforcements into the polymer matrix at fiber-matrix ratios ranging from 5 to 40%. Among the tested samples, the composites with 1 - 30 % of fiber volume fraction demonstrated the best thermal resistance and lowest shrinkage. Especially in the context of 3D-printing, aloe vera fiber reinforced polymers result in superior product qualities and improved process stability due to reduced warpage.

A twelfth aspect of the invention relates to improved plasticizing properties and flexibility of films produced from aloe vera fiber reinforced bio-composites. This is due to the fact that the aloe vera plant contains are a rich source of antioxidants, e.g., flavonoids, flavonols, polyphenols, organic acids (for example citric acid), etc., which have a positive effect on the plasticizing properties.

A thirteenth aspect of the invention involves the alternative or additional drying of the aloe very fibers as well as the mixture of the fibers with an optional hydrophobic agent dissolved and/or dispersed in a liquid carrier. This is preferably performed in a deliquification extruder and optionally comprises heating the mixture. The hydrophobic agent may comprise PE-PU, BTAK, LA, OA, CLW, CBW, RW, LO, SO, WO and/or combinations thereof (see abbreviation list for full names of materials). Preferably, a mass ratio of hydrophobic agent to aloe vera fibrous material is at least 1:200, preferably at least 1:100, more preferably at least 1:50, even more preferably at least 1:20, most preferably at least 1:15.
Preferably, the mass ratio of hydrophobic agent to aloe vera fibrous material is at most 2:1, preferably at most 1:1, more preferably at most 1:2, most preferably at most 1:5. The hydrophobic agent is preferentially a substance from the group of polyester-polyurethane elastomer (PEPU), which may be dispersed or dissolved in a liquid (also termed liquid medium), e.g. water. A liquid carrier is added to the dispersed/dissolved hydrophobic agent. The liquid carrier is preferably water or may be another liquid. The liquid carrier can be the same substance as the liquid medium of the initial dispersion comprising the hydrophobic agent or a different substance. The hydrophobic agent builds strength at the surface of the aloe vera fibrous material when the water evaporates and severely enhances the hydrophobicity of the fibers (retention of water uptake of the material when being in contact with water in gaseous and liquidous form) and further reduces the amount of water uptake of semi-finished products (e.g. films, granulates, profiles) and finished products (packaging, containers, bottles) made out of the bio- composite. Water-based, i.e. water-dispersed and/or water- dissolved, hydrophobic agents with water as the liquid medium are ecologically beneficial over solvent-based systems due to the use of water instead of organic solvents as liquid carrier and thus showing a lower carbon footprint.
Furthermore, they exhibit less health issues and are thus seen to follow core aspects of the green chemistry. Hence, water- based hydrophobic agents are preferred, but organic solvents and/or others are also within the scope of the invention.
Epotal P100 ECO is a preferred water-based hydrophobic agent (with a solid content of hydrophobic agent of approx. 40 %), which is compostable according to EN 13432, natural or industrial composting conditions or can be fully recycled. The aloe vera natural fiber fillers are derived from waste material residues that incur during the processing of aloe vera leaves into various other end-consumer products.

Further, the manufactured bio-composite packaging involves definite end-of-life scenarios (recycling and biodegradability) that can be quantified using common environmental analysis tools such as LCA.

### Application examples:

### 1. Aloe-vera reinforced PLA bio-composite and applications thereof

The residues from aloe vera gel extraction (green leaves) or aloe vera tea leaves from the have been aggregated and allowed to dry either in a drying oven at temperatures between 20 and 120°C or in a free-flowing air stream in both cases for 1 - 480 hours. The leaves have then been chopped manually or automatically and then transferred into a shredder that provided fine aloe vera fibers with a defined sizing or pulverized the leaves to yield a fine powder with mesh sizes of around 100 (sieve pore width of about 149 µm). In a next step, the so-obtained fibrous or pulverized aloe vera fillers were compounded with a poly lactic acid (PLA) thermoplastic polymer in a co-rotating, multi-shaft deliquification extruder from the company Extricom with a screw diameter of 35 mm.

The PLA material use in this example was equipped with an antifoaming additive, Tego Antifoam 4-94, at a concentration of 0.01 % in relation to the hydrophobic agent. Epotal P100 ECO was used as hydrophobic agent. A dispersion containing the hydrophobic agent and processing aids was prepared by first diluting the hydrophobic agent with water, resulting in a water-based hydrophobic agent solution with 40 % solids content. Then, the PLA and the additives were fed to the feeding section of the homogenization extruder. In the homogenization extruder the thermoplastic matrix was prepared by plasticizing the PLA at an elevated temperature well above the melting range of PLA, which is 150 °C to 160 °C, preferably at a temperature of 190-198 °C, at a screw speed of 140-170 rpm and at a feeding rate of 40 - 52 kg/h. The temperature of the plasticized binder at the inlet of the dried mixture as obtained after the first degassing section was 175-185 °C.

The previously prepared aloe vera material was gravimetrically metered into a feed throat of the deliquification extruder located in the direction of material transport by a loss-in-weight metering feeder at a feeding rate of 18-25 kg/h (based on pre-dried cellulosic material). Simultaneously, the additive dispersion that has been prepared before was metered into the deliquification extruder by a liquid dosing system in the direction of material transport at a feeding rate of 20 - 26 kg/h to give a proportion of the aloe vera material to hydrophobic agent of 8:1 (w/w) or 9:1 (w/w). The final dispersion containing the additive dispersion obtained and the aloe vera material prior to deliquifaction had weight proportions of liquid (water), aloe vera material, hydrophobic agent, cross-linking agent, surfactant, and antifoaming agent of 51 %, 44 %, 5 %, 0.3 %,0.04%, and 0.01 %, respectively.

In a subsequent step, the mixture has undergone a standard mechanical shearing and drying procedure in the deliquification extruder. The dried mixture had a gravimetric water content of < 500 ppm (0.045 %). The extractable hydrophobic agent was< 1% (0.9 %).

After the mechanical shearing and drying process, the mixture was fed into the throat section of a side feeder via a pressure resistant sealed transfer section. During this process, it was necessary to keep the side-feeder constantly underfed to avoid aggregation and piling of the materials. The side-feeder was attached to the homogenization extruder via a flange to give under-pressure conditions (< 1 atm). In this way the extruder was further vented by the upstream opening of the deliquification section. The proportion of PLA matrix to aloe vera material was varied between 1:1 to 5:1 dependent on the sizing of the fibers. The ratio of cellulosic material to hydrophobic agent was varying between 20:1 and 9: 1. The dried mixture had a hydrophobicity between 0.4% and 1.1 % and a diffusion coefficient of 1 × 10-6 mm2/s. In contrast to a hydrophobicity of 3-5 % and a diffusion coefficient of 1 × 10-4 mm2/s, observed for a composite material containing the same proportion of other cellulosic materials in a PLA matrix in the absence of a hydrophobic agent. The diffusion coefficient was determined using the Fickian diffusion model and the hydrophobicity was determined by the water absorption (%) of solid material after storage for at least 24 h in standard climate at 50.0 ± 5.0 % relative humidity and a temperature of 23.0 ± 1.0 °C in accordance with DIN EN ISO 62:2008.
The so-obtained bio-composite material was produced into granules and tested in an injection molding setup to prepare embodiments in the shape of 3-dimensional containers and test specimens for the mechanical characterization of the material properties. The test results yielded a tensile strength between 42 and 65 MPa and a modulus between 3200 und 4800 MPa. The antiseptic properties were determined by optical density methods for measuring bacterial concentrations.

It should be noted, that the above example is only one possibility of implementing the invention. An appropriate adaption of the processing settings, the shown material combinations may also be processed in other devices.

### 2. Aloe-vera reinforced PET bio-composite for blow molding and applications thereof

The aloe vera filler was prepared equally to the process described in example 1 except for pulverizing the fibers to a mesh sizes of 200 (sieve pore width of 74 µm). In this example the aloe vera material was compounded with a bio-based polyethylene terephthalate (bPET) thermoplastic polymer suitable formulated commercially for blow-molding application. The compounding process was carried out again in a co-rotating, multi-shaft deliquification extruder from the company Extricom with a screw diameter of35 mm.

The PET material use in this example was equipped with the antifoaming additive, Tego Antifoam 4-94, at a concentration of 0.02 % in relation to the hydrophobic agent. Again, Epotal PI00 ECOwas used as hydrophobic agent. A dispersion containing the hydrophobic agent and processing aids was prepared by first diluting the hydrophobic agent with water, resulting in a water-based hydrophobic agent solution with 42% solids content. Then, the bPET and the additives were fed to the feeding section of the homogenization extruder. In the homogenization extruder the thermoplastic matrix was prepared by plasticizing the bPET at an elevated temperature well above the melting range of PET, which is 190 °C to 210°C, preferably at a temperature of 215 °C, at a screw speed of 150-175 rpm and at a feeding rate of 44 - 50 kg/h. The temperature of the plasticized binder at the inlet of the dried mixture as obtained after the first degassing section was 198- 205 °C.

The previously prepared aloe vera material was gravimetrically metered into a feed throat of the deliquification extruder located in the direction of material transport by a loss-in-weight metering feeder at a feeding rate of 20-23 kg/h (based on pre-dried cellulosic material). Simultaneously, the additive dispersion that has been prepared before was metered into the deliquification extruder by a liquid dosing system in the direction of material transport at a feeding rate of 20 - 26 kg/h to give a proportion of the aloe vera material to hydrophobic agent of 8:1 (w/w) or 9:1 (w/w). The final dispersion containing the additive dispersion obtained and the aloe vera material prior to deliquifaction had weight proportions of liquid (water), aloe vera material, hydrophobic agent, cross-linking agent, surfactant, and antifoaming agent of 53 %, 42 %, 4 %, 0.2 %, 0.05%, and 0.01 %, respectively.

In a subsequent step, the mixture has undergone a standard mechanical shearing and drying procedure in the deliquification extruder. The dried mixture had a gravimetric water content of < 500 ppm (0.045 %). The extractable hydrophobic agent was< 1%(0.9 %).

After the mechanical shearing and drying process, the mixture was fed into the throat section of a side feeder via a pressure resistant sealed transfer section. During this process, it was necessary to keep the side-feeder constantly underfed to avoid aggregation and piling of the materials. The side-feeder was attached to the homogenization extruder via a flange to give under-pressure conditions (< 1 atm). In this way the extruder was further vented by the upstream opening of the deliquification section. The proportion of bPET matrix to aloe vera material was varied between 1:1 to 2,5:1. The ratio of cellulosic material to hydrophobic agent was varying between 20:1 and 9:1. The dried mixture had a hydrophobicity between 0.3% and 0.7% and a diffusion coefficient of 1 × 10-6 mm2/s. In contrast to a hydrophobicity of 3 % and a diffusion coefficient of 1 × 10-4 mm2/s, observed for a composite material containing the same proportion of other cellulosic materials in a bPET matrix in the absence of a hydrophobic agent.

The so-obtained bio-composite material was produced into granules and tested in an blow molding setup to prepare embodiments in the shape of 3-dimensional containers and test specimens for the mechanical characterization of the material properties. The test results yielded a tensile strength between 38 and 64 MPa and a modulus between 3300 und 4200 MPa. The antiseptic properties were determined by optical density methods for measuring bacterial concentrations.

It should be noted, that the above example is only one possibility of implementing the invention. An appropriate adaption of the processing settings, the shown material combinations may also be processed in other devices.

### 3. Extrudable aloe vera fiber filled PLA bio-composite

The material obtained by the method described in example 1, can be used in a hotmelt laininating process to yield a filament that can be utilized in extrusion-based additive manufacturing methods.

The filament is formed from the obtained bio-composite material in which the aloe vera fiber and the matrix content are adjusted to provide 3D printed composite surfaces with low shrinkage and good thermal resistance behavior. Such a composite surface is visually perceived as a light-green to brown-colored surface. The bio-composite, however, can be equipped with an organic colorant to achieve a desired specific color.
The filament in this example has been formed out of semicrystalline polylactic acid filled with aloe vera fibers in such a way that it exhibited a complex viscosity (η*) of 8000 - 10000 Pa·s or more when measured at a frequency of 0.1 Hz and 160 ° C. When the composite melt formed from the filament was extruded to additively manufacture objects and parts, the shear storage elastic modulus was at least 1. at a temperature (Tsub) of 130°C. In this example, the composite material had a dimensional molding shrinkage of less than 1.15% when solidified from a melt and a maximum cross- sectional width (Wf) of 5 mm or less, preferably 3 mm or less. In this example, a three-dimensional composite product embodiment according to a model has been produced using an additive manufacturing system. For this the filament was supplied to a heater unit of the additive manufacturing fabrication system and each portion of the filament supplied to the heater unit was heated to a processing temperature higher than the melting temperature (Tm) of the semicrystalline PLA matrix, thereby forming a portion of the
composite melt corresponding to the portion of the filament supplied to the heater unit and simultaneously discharging a portion of the composite melt from a nozzle having a hole with a defined width. The dispensing operation was controlled in such a way that portions of the composite melt adhere to each other on a platform thereby forming the three- dimensional composite product. The amount of the aloe vera filler in the filament is determined by extrusion so that the composite material of the filament has a complex viscosity η* of 8000 - 10000 Pa·s or higher when measured at 160°C at a frequency of 0,1 Hz. In the present invention, the printing temperature at the nozzle exit was 200°C or less, preferably 160 to 190°C.

### List of abbreviations:

Matrix polymers:
   PLA Polylactic acid
   PCL Polycaprolactone
   PBS Polybutylene succinate
   PHBH Polyhydroxyalkanoates such as poly(3- hydroxybutyrate-co-3-hydroxyhexanoate) PBAT Polybutyrate
   PBSA Polybutylene succinate adipate PHB Polyhydroxybutyrat
   PHBV Polyhydroxybutyrate-co-hydrovalerate PBT Polybutylene terephthalate
   PET Polyethylene terephthalate PTT Polytrimethylene terephthalate PC
   Polycarbonate Sub Suberin
   Cut Cutin
Hydrophobic agents:
   PE-PU Polyester Polyurethane (Epotal^{®} PI00 ECO, BASF) BTAK BioTAK^{®} S100 (acrylic waterborne adhesive)
   LA Linoleic acid OA Oleic acid
   CLW Candelilla wax CBW Carnauba wax
   RW Rice wax
   LO Linseed Oil
   SO Sunflower Oil
   WO Walnut oil

## Claims

1. Method for producing an aloe vera reinforced bio-composite material, comprising:
a) Plasticizing a binder in a first extruder, wherein the binder comprises a polymer;
b) Providing a mixture of fibrous filler material made from aloe vera, in particular from aloe vera leaves, and a hydrophobic agent dissolved and/or dispersed in a liquid carrier;
c) Mechanically shearing and drying the mixture in a second extruder whereby liquid is at least partly or completely extracted from the mixture; and .
d) Blending the dried mixture with the plasticized binder.

2. Method according to claim 1, comprising preparation of the natural fiber filler out of its raw material form, the raw material form comprising dried waste material from the production of aloe vera extracts, in particular the dried waste material corresponds to aloe vera leave residues with a length of 10 - 50 mm and a moisture content of 1 - 26 %.

3. Method according to claim 2, wherein the leaves being chopped and/or shredded into a powder with a fiber length of·0.05 - 12 mm, washed with hot water and dried at temperatures between 60°C and 120°C for a time between 20 - 3600 minutes to remove any residues of dirt and parenchyma cells, wherein in particular aloe vera leaf particles have sizes in a range from 20 mesh to 200 mesh.

4. Method according to one of the preceding claims, wherein the binder and/or the polymer is a biodegradable bio-based and/or recycled polymer and/or recyclable polymer,
in particular wherein the polymer is chosen from PLA, PLA, PCL, PBS, PHBH, PBAT, PBSA, PHB, PHBV, PBT, PET, PIT, PC, HDPE, PVC, LDPE, PP, PS, natural biopolyesters such as polymers from the group of Polyhydroxyalkanoates (PHA) such as PHB, PHBV, PHBH, as well as natural heteropolymers with repeating ester linkages on the backbone, such as Suberin (Sub), and Cutin (Cut), and/or combinations thereof,
wherein preferably the binder comprises Polylactic acid (PLA), Polybutylene succinate (PBS), Poly(butylene succinate-co-adipate) (PBSA), Polyhydroxybutyrate (PHB), Poly(3-hydroxybutyrate-co-3 - hydroxyvalerate) (PHBV), Poly(3-hydroxybutyrate-co-3- hydroxyhexanoate) (PHBH), Polycaprolactone (PCL), Polybutylene adipate terephthalate (PBAT),
preferably wherein the binder comprises a combination chosen from PLA/PBS, PLA/PBSA, PBAT/PHBH, and/or PLA/PCL,
preferably wherein the combination is used with a weight ratio (w/w) of 80/20, 50/50, 20/80.

5. Method according to one of the preceding claims comprising
- drying of the aloe vera fibers as well as the mixture of the fibers with an optional hydrophobic agent dissolved and/or dispersed in a liquid carrier, preferably performed in a deliquification extruder and optionally comprising heating the mixture, and/or
- the hydrophobic agent comprising one of PE-PU, BTAK, LA, OA, CLW, CBW, RW, LO, SO, WO and/or combinations thereof, wherein preferably, a mass ratio of hydrophobic agent to aloe vera fibrous material is at least 1:200, preferably at least 1:100, more preferably at least 1:50, even more preferably at least 1:20, most preferably at least 1:15, wherein preferably, the mass ratio of hydrophobic agent to aloe vera fibrous material is at most 2:1, preferably at most 1:1, more preferably at most 1:2, most preferably at most 1:5, and/or
- Wherein preferably the hydrophobic agent is a substance from the group of polyester-polyurethane elastomer (PEPU), which may be dispersed or dissolved in a liquid, in particular water.

6. Aloe vera reinforced bio-composite material comprising a plasticized binder and a mixture of fibrous filler material made from aloe vera, in particular made by the method according to one of claims 1 to 5, the material being a granulate or a powder.

7. Container for packaging of dry and moist substances, the container being made from a bio-composite material, in particular made by the method according to one of claims 1 to 5, in particular the container being made from the granulate or powder of claim 6.

8. Container according to claim 7, wherein the container is produced by extrusion, injection molding, injection blow molding, compression molding, coextrusion, thermoforming and/or extrusion-based additive manufacturing technologies, e.g. FLM, and/or 3D-printing.

9. Container according to claim 7 or 8 having a slightly to intensely green color, which color depending on the fiber-filler ratio.

10. Container according to one of claims 7 to 9, the container having antiseptic properties, UV-absorbing properties, and/or UV-light sensitivity to determine exposure levels to sunlight.

11. Container according to one of claims 7 to 9, wherein the aloe vera reinforced bio-composite material of aloe vera fiber composites comprises a fiber-matrix interface comprising PLA and recycled high density polyethylene matrix in compositions ranging from 5 to 40% of fiber volume fraction,
wherein in particular the fiber-matrix interface comprises the aloe vera fiber treated with NaOH prior to producing the composite..

12. Container according to one of claims 7 to 11, the composites comprising a fiber volume fraction of 1 - 30 %, wherein in particular the container is made by 3-D-printing.

13. Container according to one of claims 7 to 12, wherein the bio-composite material having a tensile strengths in the order of 60 - 90 MPa, a maximum bending strength on the order of 80 - 120 MPa and a maximum impact resistance of 40 - 60 J/m.

14. Container according to one of claims 7 to 13, being a container for food and/or drinks and/or medicine and/or portable electronic devices.

15. Container according to one of claims 6 to 15, being a bottle or screw-cap container.

## Amended claims

### Amended claims in accordance with Rule 137(2) EPC.

1. Aloe vera reinforced bio-composite material comprising a plasticized binder blended with a mixture of fibrous filler material made from aloe vera leaves by a method comprising mechanically shearing and drying the mixture in an extruder, the liquid being at least partly or completely extracted from the mixture, the aloe vera leaves being added in the form of aloe vera leave residues with a length of 10 - 50 mm and a moisture content of 1- 26% the material being a granulate or a powder.

2. Bio-composite material according to claim 1, wherein the aloe vera leaves are submitted to a process, prior to the blending, of chopping and/or shredding into a powder with a fiber length of·0,05 - 12 mm, washed with hot water and dried at temperatures between 60°C and 120°C for a time between 20- 3600 minutes to remove any residues of dirt and parenchyma cells.

3. Bio-composite material according to claim 1 or 2, wherein the binder and/or the polymer is a biodegradable bio-based and/or recycled polymer and/or recyclable polymer,
in particular wherein the polymer is chosen from Polylactic acid, Polycaprolactone, Polybutylene succinate, Polyhydroxyalkanoates such as poly(3- hydroxybutyrate-co-3-hydroxyhexanoate), Polybutyrate, Polybutylene succinate adipate, Polyhydroxybutyrat, Polyhydroxybutyrate-co-hydrovalerate, Polybutylene terephthalate, Polyethylene terephthalate, Polycarbonate, High-density Polyethylene, Polyvinylchloride, Low-density Polyethylene, Polypropylene, Polystryrene, natural biopolyesters such as polymers from the group of Polyhydroxyalkanoates (PHA) such as PHB, PHBV, PHBH, as well as natural heteropolymers with repeating ester linkages on the backbone, such as Suberin (Sub), and Cutin (Cut), and/or combinations thereof,
wherein preferably the binder comprises Polylactic acid (PLA), Polybutylene succinate (PBS), Poly(butylene succinate-co-adipate) (PBSA), Polyhydroxybutyrate (PHB), Poly(3-hydroxybutyrate-co-3 - hydroxyvalerate) (PHBV), Poly(3-hydroxybutyrate-co-3- hydroxyhexanoate) (PHBH), Polycaprolactone (PCL), Polybutylene adipate terephthalate (PBAT),
preferably wherein the binder comprises a combination chosen from PLA/PBS, PLA/PBSA, PBAT/PHBH, and/or PLA/PCL,
preferably wherein the combination is used with a weight ratio (w/w) of 80/20, 50/50, 20/80.

4. Container for packaging of dry and moist substances, the container being made from a bio-composite material, the bio-composite material comprising a plasticized binder and a mixture of fibrous filler material made from aloe vera leaves.

5. Container according to claim 4 the container being made from the granulate or powder of any of claims 1 to 3.

6. Container according to claim 5, wherein the container is produced by extrusion, injection molding, injection blow molding, compression molding, coextrusion, thermoforming and/or extrusion-based additive manufacturing technologies, e.g. FLM, and/or 3D-printing.

7. Container according to claim 5 or 6 having a slightly to intensely green color, which color depending on the fiber-filler ratio.

8. Container according to one of claims 5 to 7, wherein the container has the antiseptic properties of Lupeol, salicylic acid, urea nitrogen, cinnamonic acid, phenols and sulfur present in the Aloe Vera leaves, and/or
wherein the container has UV-absorbing properties, and/or
wherein the container has UV-light sensitivity to determine exposure levels to sunlight.

9. Container according to one of claims 8 to 10, wherein the aloe vera reinforced bio-composite material of aloe vera fiber composites comprises a fiber-matrix interface comprising PLA and recycled high density polyethylene matrix in compositions ranging from 5 to 40% of fiber volume fraction,
wherein in particular the fiber-matrix interface comprises the aloe vera fiber treated with NaOH prior to producing the composite.

10. Container according to one of claims 5 to 9, the composites comprising a fiber volume fraction of 1 - 30 %, wherein in particular the container is made by 3-D-printing.

11. Container according to one of claims 5 to 10, wherein the bio-composite material having a tensile strength in the order of 60 - 90 MPa, a maximum bending strength on the order of 80 - 120 MPa and a maximum impact resistance of 40 - 60 J/m.

12. Container according to one of claims 5 to 11, being a container for food and/or drinks and/or medicine and/or portable electronic devices.

13. Container according to one of claims 5 to 12, being a bottle or screw-cap container.
